# EUROPEAN PATENT SPECIFICATION

(11) **EP 0 577 755 B1**
(45) Date of publication and mention of the grant of the patent: **15.10.1997**
(21) Application number: 92910616.9
(22) Date of filing: 02.04.1992
(51) Int. Cl.: B65D 77/04, B65D 65/46, B65D 81/32

(54) **CONTAINERIZATION SYSTEM**
VERPACKUNGSSYSTEM
SYSTEME DE CONTENEURISATION

(30) Priority: 02.04.1991 US 679290; 04.04.1991 US 680301; 11.06.1991 US 713684
(43) Date of publication of application: 12.01.1994
(73) Proprietor: RHONE-POULENC INC., Research Triangle Park, NC 27709 (US)
(72) Inventor: GOUGE, SAMUEL, TERRY, Raleigh,NC 27614 (US); SHUE,JAMES E., Raleigh NC 27614 (US)
(74) Representative: Bentham, Stephen
(86) International application number: US9202705
(87) International publication number: WO9217383

(56) References cited:
- EP-A- 0 132 726
- EP-A- 0 148 170
- EP-A- 0 347 222
- FR-A- 1 258 379
- FR-A- 1 328 999
- GB-A- 922 317
- US-A- 2 560 649
- US-A- 3 322 674
- US-A- 4 657 134
- US-A- 4 681 228
- US-A- 4 846 992
- US-A- 5 080 226

## Description

The invention relates to a containerization system and to containers which are particularly suitable for storing, packaging and transporting toxic or hazardous products, e.g. agricultural chemical compounds, such as pesticides and concentrates thereof.

At present, most hazardous and toxic liquids are stored in metal drums or, where smaller quantities are involved, in plastic containers. Hazardous compounds, especially agrochemical compounds, are formulated in various compositions.

The expression toxic or hazardous compounds as used herein means an industrial chemical or agrochemical compound, which, if released in the quantity or concentration normally in storage and shipping containers, may cause damage to the environment or be injurious to a person contacted by it.

With respect to agricultural chemicals, liquid compositions, particularly in the form of concentrates, are most convenient for farmers because of the relative ease with which they can be handled. There are, nevertheless, difficulties in handling such liquid compositions. There is a danger of spillage or leakage if holes develop in containers that are accidentally dropped and thereby crack or fail. Containers have been developed which possess great resistance to impact and shock. While such containers are secure under normal storage and handling conditions,in the event of an accident, for example during transportings, there remains an appreciable risk of spillage or leakage with rapid loss of liquid. Leakage of toxic and hazardous chemicals can create damage to the environment.

The chemical and packaging industries have long sought a secure container which provides sufficient safeguard for those handling it, such as farmers and transporters, as well as adequate protection for the environment.

It is also or can be also the situation when two or more agrochemicals are used together to treat a crop of any kind of plant(s) and when the normal use of these agrochemicals is at a very different use rate. Indeed it is known that the use rate of some pesticides may vary in the order of 10 or even 100 times from one pesticide to another.

Another situation where the use of a water soluble bag for a pesticide has been considered up to now of no interest is the situation whereby incompatible agrochemicals are used. Incompatible agrochemicals are agrochemicals which, when added together in a concentrated form or in a tank for mixing, at least partially, agglomerate together and/or produce sediment at the bottom of the tank without being dispersed or emulsified in the tank when stirred.

In the art of detergents or laundry, it is known to use systems with one inner bag, or sachet, in an outer pouch (USP 4846992 or European patent application 132726), however these known systems comprise an outer water-permeable pouch or bag. Such water permeable pouches are in fact water-insoluble, and thus, they are not appropriate for uses wherein the whole containerization system has to disappear when put in water. This is especially the situation of farmers who disperse agrochemicals in water tank in order to obtain a spraying mixture.

FR-A-1,328,999 discloses sachets for use in a washing machine comprising water soluble material which dissolves in water at a predetermined temperature. The use of a combination of sachets which dissolve at different temperatures is also disclosed.

Unfortunately the use of more than one agrochemical by farmers to treat their crop is more and more common, and the farmers like very much the so-called ready-mix which are mixtures that the farmers may use directly for dilution in their tank. Thus, the ready mix practice does not yet fit to the water soluble bag technology.

The present invention relates to a containerization system which comprises at least one inner water soluble bag and an outer cold water soluble bag containing the inner bags with its content, wherein the inner bag contains an agrochemical selected from plant protection agents, pesticides, insecticides, herbicides, fungicides, nematocides, acaricides, plant nutrients and plant growth regulators, and the outer bag contains another agrochemical different from the first agrochemical and incompatible therewith, selected from activity promoters, penetrating agents, synergists, antidotes, sticking agents, spreaders, activators, compatibility agents, adjuvants for the cold water soluble bags and plasticizers, wherein both the outer and inner bags dissolve in water under the same conditions and are completely soluble at a temperature lower than 35°C. Typical agrochemicals are in solid, liquid (preferred when substantially non-aqueous), or organic gel form.

An object of the instant invention is to provide a new containerization system to contain agrochemicals which is safe for everybody.

Another object of the instant invention is to provide a new containerization system to contain agrochemicals which is easy for the farmer to manipulate.

Another object of the instant invention is to provide a new containerization system to contain agrochemicals which is readily, rapidly and easily soluble and/or dispersible in water.

Another object of the instant invention is to provide a new containerization system to contain agrochemicals which is as much condensed as possible, using the least amount of space.

Another object of the instant invention is to provide a new containerization system and/or a new method to contain more than one hazardous agrochemical which diminishes the risks of pollution.

Another object of the instant invention is to provide a new containerization system to contain two or three hazardous agrochemicals.

Another object of the instant invention is to provide a new containerization system to contain at least one agrochemical of the type plant protection agent on one side, and, separately from this first one, at least one agrochemical of the type adjuvant.

Another object of the invention is to provide a new containerization system to contain two or three hazardous agrochemicals, which are normally used at different use rates.

Another object of the instant invention is to provide a new system to contain two or three hazardous agrochemicals, which are normally incompatible.

Another object of the present invention is to provide a new system for containing chemicals such as agrochemicals which enables such chemicals to be easily and homogeneously dispersed in water even though they may be incompatible.

Another object of the present invention is to provide a new system for containing agrochemicals which enables such chemicals to be easily and homogeneously dispersed in water even though they may be present in a different or very different amount.

A further object of the present invention is to provide a containerization system wherein less solvent is needed in the formulation of an agrochemical, which is a cost saving both in shipping and manufacturing.

A further object of the present invention is to provide a new containerization system for agrochemicals which eliminates, or at least reduces the disagreeable odors or odor problems of odoriferous chemicals.

A further object of the present invention is to provide a new containerization system for agrochemicals which eliminates, or at least reduces, the waste disposal of contaminated containers and overpacks.

A further object of the present invention is to provide a new containerization system for agrochemicals which quickly dissolves when put into water.

The invention further seeks to provide a new containerization system for agrochemicals which reduces the risks of clogging the spray nozzles or the filters of spray tanks.

Other objects of the invention will better appear from the following description.

The objects of the invention can be achieved in full or in part by means of the invention.

Fig. 1 is a front view which schematically shows an embodiment of the present invention having an inner bag 110 located within an outer bag 120.

Fig. 2 is a side view of the embodiment of Fig. 1.

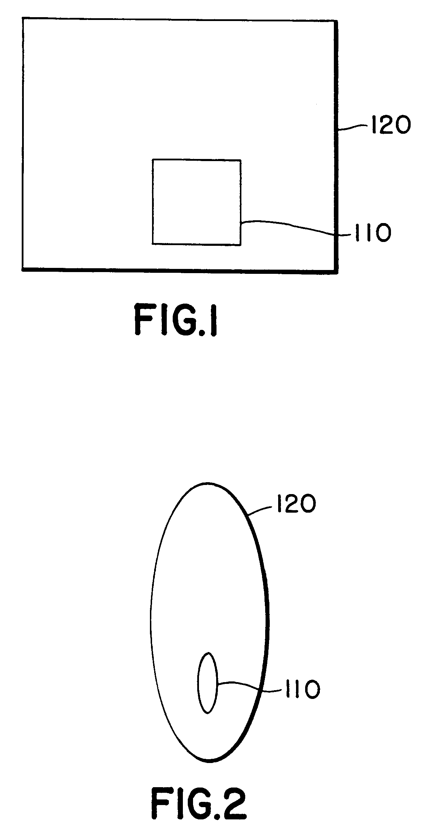

Fig. 1 and 2 illustrate, but are not intended to limit, the present invention.

The containerization system of the present invention comprises at least one (preferably one or two) inner water soluble or water dispersible bags containing a hazardous compound or product, which is an agrochemical, more preferably a non-aqueous agrochemical. The containerization system further comprises an outer water soluble or water dispersible bag containing another hazardous compound or product (different from the first hazardous compound), which is an agrochemical, more preferably a non-aqueous agrochemical. The outer bag also contains the inner bag with its content. Optionally, this so-called "poly-bag system" is itself contained in an external water insoluble container, such as a rigid or semi-rigid box.

A further specificity of the instant invention is that the containerization system comprises an outer water soluble bag and an inner water soluble bag containing two different kinds of agrochemical, one of the bags containing an agrochemical which is a plant protection agent (such as pesticides, e.G. Insecticides, fungicides, herbicides, acaricides, nematocides), or plant nutrients or plant growth regulators, and the other bag containing an agrochemical of the adjuvant kind (such as activity promoters including penetrating agents, synergists, antidotes, sticking agents, spreaders, activators, compatibility agents; or adjuvants for the water soluble bags as plasticizers). The two kinds of agrochemicals used in the invention are in some way cooperating to improve the activity of the plant protection agent so as to increase this activity (synergists or plant penetrating agent), or to facilitate this activity (plant penetrating agent) or to improve this activity (sticking agents or spreaders) or to make this activity safer for the plant (antidotes) or for the bag (plasticizer of the polymeric material constituting the wall of the bag). The invention is thus particularly appropriate when the plant Protection agent or plant nutrient or plant growth are incompatible. As already said, the adjuvant may be penetrating agent, synergist, antidote, sticking agent, spreader, activator, compatibility agent or plasticizer, but can also have more than one of these properties or effect.

The hazardous compounds or products of the invention and the wall of the bags they contact are chosen so that the hazardous compounds or products do not substantially dissolve the wall of the bag they contact and do not substantially permeate through it. By this it is meant that the dissolution and permeation are each independently less than 5%, more preferably less than 1% and most preferably less than 0.5% of the total weight of the bag.

The hazardous agrochemical compositions, which are contained in the bags according to the invention are essentially materials containing 0.5 to 80% (w/w) of active ingredient and these agrochemical compositions are concentrated compositions which are supposed to be diluted in water before spraying.

The agrochemical compositions which may be used in the invention and which may be contained in the outer or the inner container may be in different physical forms. They may be in the form of a solid such as powders, preferably water wettable powders, or granules, preferably water dispersible granules; or they may be in the form of a non-aqueous liquid, such as a solution or a dispersion or an emulsion in an organic solvent; this liquid may be more or less viscous; it may be a very fluid liquid such as a liquid having a Brookfield viscosity between 100 and 1000 centipoise, or it may be a viscous liquid, such as a liquid having a Brookfield viscosity from 1000 up to 30000 centipoise (Measurements or viscosities in this specification are made with a Brookfield viscosimeter at 20°C with a flat plate rotating at 20 revolutions per minute); a further advantageous physical form of the agrochemical composition is the form of an organic gel.

Gels which are of particular interest in the invention are organic gels which have viscosities of 600 to 30,000 centipoise, preferably 1,000 to 12,000 centipoise, and still more preferably 1,000 to 5,000 centipoise.

According to another aspect of the invention, the material or gel which is used in the invention is essentially a material which has a phase difference phi between the controlled shear stress and the resulting shear strain, such that tg(phi) is less than or equal to 1.5, preferably less or equal to 1.2. Tg(phi) is the tangent of the phi angle (or phase difference).

The measurement of phi is made by means of a dynamic rheometer. Dynamic rheometers which are appropriate to measure phi are known and available commercially. They usually have a flat fixed plate and a rotating cone or plate, or a so-called coquette measuring system. Other mechanical systems are also available. Generally the choice of one system or another is made according to the recommendations of the seller of the rheometer, and is adapted to the kind of compound, gel or liquid, which is tested. The particular choice of a specific type of rheometer is something well known by the man skilled in the art of rheology. A rotating plate over another plate or a cone rotating over a plate are often more appropriate when a gel or a viscous liquid is tested. When two kinds of system for the rheometer are possible, similar values of phi are actually measured. The cone (or the plate or the coquette) is caused to rotate by means of a controlled speed motor; the rotation is a sinusoidal one, i.e., the strain and the angular displacement change as a sine function with time. Tg(phi) is equal to the ratio G''/G', wherein: G' is the storage modulus (represents the behaviour of a perfect solid); G'' is the loss modulus (represents the behaviour of a perfect liquid). G' and G'' is the loss modulus (represents the behaviour of a perfect liquid). G' and G'' are expressed in Pascal for a given rotational speed (radian per second).

G' and G'', and thus tg(phi), may depend on the amplitude of the oscillations (percentage of strain) of the rheometer; however, there is generally a so-called viscoelastic plateau whereby the values G' and G'' of a gel do not depend substantially on the said amplitude; this means that in the conditions of the test under the viscoelastic plateau the structure of the gel is maintained and no destruction of the gel into a liquid happens. Of course, the measurement of G' and G'' of a gel is made under the conditions of this viscoelastic plateau, just because it corresponds to the normal gel structure which is precisely what is tested.

G' and G'', and thus tg(phi), may also depend on the speed of the oscillations (time to reach the chosen percentage of strain; expressed as radian per second) of the rheometer; however, when the gel is well structured, there is not so much variation from one speed to another. In order to have a reasonable measurement of the properties of a gel, it is generally preferred to operate in conditions whereby the gel is not too much stressed, that is to say at speed such as 1 radian per second. Of course, measurements at higher speed may also be made.

It is known that a gel is generally a colloid in which the dispersed phase has combined with the continuous phase to produce a viscous, jelly-like product; it is also a dispersed system consisting typically of a high molecular weight compound or aggregate of small particles in very close association with a liquid. The gels used in the invention have basically an organic continuous phase. In contrast, most of the existing materials/gels are water-based and have an aqueous continuous phase. Furthermore, the gels used in the invention have essentially one physical phase, at least as can be seen when visually observed. Preferred gels in the invention are also gels which can be divided by cutting and whose cut parts are able to merge together by simple juxtaposition.

The non aqueous agrochemical compositions which are used in the invention are essentially materials having a low water content, generally less than 5% (by weight), preferably less than 3%, more preferably less than 1%.

The choice of the particular physical form of the agrochemicals used in the invention depends on the particular agrochemicals which are involved.

The following features, alone or in combination, constitute preferred features of the invention:

Agrochemicals which may be used in the invention include plant protection agents (including pesticides, such as insecticides, fungicides, herbicides, acaricides or nematocides; or plant growth regulators or plant nutrients).

The invention is not limited to some specific agrochemicals; a list of many agrochemicals which can be used in the poly-bag system of the invention includes:
fungicides such as triadimefon, tebuconzaole, prochloraz, triforine, tridemorph, propiconazole, pirimicarb, iprodione, metalaxyl, bitertanol, iprobenfos, fulsilazol, fosetyl, propyzamide, chlorothalonil, dichlone, mancozeb, anthraquinone, maneb, vinclozolin, fenarimol, bendiocarb, captafol, benalaxyl, thiram;
herbicides (or defoliants) such as quizalofop and its derivatives, acetochlor, metolachlor, imazapur and imazapyr, glyphosate and gluphosinate, butachlor, acifluorfen, oxyfluorfen, butralin, fluazifopbutyl, bifenox, bromoxynil, ioxynil, diflufenican, phenmedipham, desmedipham, oxadiazon, mecoprop, MCPA, MCPB, linuron, isoproturon, flamprop and its derivatives, ethofumesate, diallate, carbetamide, alachlor, metsulfuron, chlorsulfuron, chlorpyralid, 2,4-D, tribufos, triclopyr, diclofop-methyl, sethoxydium, pendimethalin, trifulralin, ametryn, chlorameben, amitrole, asulam, dicamoa, bentazone, atrazine, cyanazine, thiobencarb, prometryn, 2-(2-chlorobenzyl)-4,4-dimethyl-1,2-oxazolidin-3-one, fluometuron, napropamide, paraquat, bentazole, molinate, propachlor, imazaquin, metribuzin, tebuthiuron, oryzalin;
insecticides or nematicides such as ebufos, carbosulfan, amitrax, vamidothion, ethion, triazophos, propoxur, phosalone, permethrin, cypermethrin, parathion, methylparathion, diazinon, methomyl, malathion, lindane, fenvalerate, ethoprophos, endrin, endosulfan, dimethoate, dieldrin, dicrotophos, dichlorprop, dichlorvos, azinphos and its derivatives, aldrin, cyfluthrin, deltamethrin, disulfoton, chlordimeform, chlorphrifos, carbaryl, dicofol, thiodicarb, propargite, demeton, phosalone; and
plant growth regulators such as gibberellic acid, ethrel or ethephon, cycocel, chlormequat, ethephon, mepiquat; and
penetrating agents such as high molecular weight hydrocarbon oil, for example limonene, paraffin based petroleum oil, polymerized pinene, oily paraffins, polyalkoxylated fatty alcohols, alkyl polyoxyethylene ether, free fatty acids, alkylaryl polyethoxylated ethanol, alkylaryl ethanol, polyol fatty acids esters, polyethoxylated polyol fatty acids esters, vegetable oil or gum, cottonseed oil, ethoxylated or polyethoxylated fatty amine, ethoxylated nonyl phenol, glycerol phtalate, alkyl polyoxyethylene glycols, alkylphenoxy polyoxyalkylene ether, poly-p-menthene, polymerized pyrophosphates, alkylaryl sulfonic acid salts or esters, alkylaryl polyoxyethylene glycol.
synergists are generally rather specific of a particular active ingredient, and thus, are known per se,
antidotes or safeners are compounds as reducing the phytotoxicity of agrochemicals or pesticides. They are generally specific of a particular pesticide, and thus, are know per se,
stickers or spreaders such as phosphoric acid or its agronomically acceptable metallic salts, free fatty acids, alkylaryl alkoxylate, polyoxyethylene glycol phosphate esters, polyalkoylated alcohol, alkyl polyethoxyethanol, alkylaryl polyethoxylated ethanol or propanol or isopropanol or butanol, dialkylarylpolyethoxy ethanol or glycerol, alkylaryl polyoxyethylene glycol, alkylaryl polyoxyethylene glycol ether, alkylaryl polyalkoxylated alcohols, bis(2-ethylhexyl)benzenedicarboxylate, methoxylated alkylcarboxylate, alkoxylated polyolester, alkylaryl sulfonate, polyoxyethylated nonyl or octyl phenol, nonylphenoxy polyethyleneoxy ethanol, 1-methoxy ethanol oleate, cotton seed oil, alkylphenoxy polyethoxy ethanol, ethoxylated alkyl aryl phosphate esters, alkylphenoxy polyethoxy ethanol phosphate, dialkylbenzene dicarboxylate, glycerol phtalate, polyethoxylated polyol fatty acid ester, polyol fatty acid ester, polyethoxylated fatty amine, dodecyl or dodeyloxy benzene or dibenzene sulfonate, di-menthene, polymenthene, limonene, alkylaryl propyl carbinols, polyoxyethylenepolyoxyropylene block copolymer,
compatibility agents such as alkylaryl polyethoxyethyleneglycol phosphate ester, alkylaryl polethoxyethylene ethanol phosphate ester, branched chain alcohol sulfate, sodium 2-ethylhexyl butanedioate, polyester of sodium thio butane dioatc, isopropyl phosphate ester, ester of alkyl polyoxyethylene ethers, alkyl phenoxy polyethyleneoxy phenyl phosphate,
plasticizers such as (this list is non limitative): alcohol compounds (linear or branched, saturated or unsaturated), especially alcanols having from 6 to 36 carbon atoms; alcenols having from 10 to 30 carbon atoms; glycols and triols such as di- and tripentacrythritol, trimethylolethane, anhydroenneaheptitol, butanetriol, hexanetriol, erythritols, threitols, ribitol, arabinitols, xylitol, allitol, dulcitol, glucitol, sorbitol, mannitol, altritol, iditol, maltitol, lactitol, ethyleneglycol, diethyleneglycol, triethyleneglycol, trimethyleneglycol, tetramethyleneglycol, pentamethyleneglycol, triethyleneglycol, propyleneglycol, butyleneglycol, glycerol, diglycerol, 2,3-butanediol, 1,3-butanediol, sorbitol; mono-, di-, tri-, tetra-, and poly-amines, such as diethylenetriamine and ethanolamines; amides, e.g., acetamide and formamide, dimethylformamide, hexamethyl phosphotriamide; sulfoxides, e.g., dimethylsulfoxide; piperazines.

As already those lists of possible compounds are sometimes overlapping due to the fact that some compounds may have more than one agricultural effect, Activators or compatibility agents may also be used and may also be synergists or penetrating agents or stickers or spreaders or antidotes. Chelating agents may also be included in one or the other kind of hereabove mentioned adjuvants.

According to another feature, the ratio of volume between the outer bag and the inner bag is more than 1.5:1, Preferably more than 2:1.

According to another feature, the ratio of weight of agrochemicals contained respectively in the outer bag and in the inner bag(s) is approximately equal to the ratio of the use rates of (or recommended for ) the active ingredients contained respectively in the outer bag and the inner bag(s). Approximately equal means equal to the said ratio of the use rates or to a value which is in the range of plus or minus 10% of the said ratio of the use rates.

According to another feature of the invention both outer and inner bags can float or sink when put into water, such as the tank of water that a farmer uses for mixing and spraying.

According to still another feature of the invention which is particularly appropriate for incompatible or very incompatible agrochemicals, one of the bags (either an inner bag or the outer bag) floats and the other (or its content; preferably the outer bag) sinks when put into water. These specific bags are particularly suitable for very incompatible agrochemicals, whereby these incompatible agrochemicals, due to the fact that one bag floats and the other sinks, are separately diluted and mixed with water before being intermixed with each other.

When it is said that the inner bag floats and the outer bag sinks when put into water, that means that, when put into water, the inner bag(s) filled with its colitent, or its content alone (when the said inner bag has dissolved), float(s) when the outer bag is open (that is to say when the enveloping film of the outer bag has dissolved enough to let its content move) and when, at the same time, this partially opened outer bag (before it has completely dissolved) and its content (before or after this outer bag has completely dissolved) sink.

When it is said that the outer bag floats and the inner bag(s) sinks when put into water, that means that, when put into water, the inner bag(s) filled with its content, or its content alone (when the said inner bag has dissolved), sink(s) when the outer bag is open (that is to say when the enveloping film of the outer bag has dissolved enough to let its content move) and when, at the same time, this partially opened outer bag (before it has completely dissolved) and its content (before or after this inner bag has completely dissolved) float.

According to a particular feature of the invention, wherein one bag is floating and the other is sinking, the floating bag contains a wettable powder or water dispersible granules.

According to a particular feature of the invention which is of particular interest, the bags of the invention are made in such a way that the outer bag, either with its full content or with only the agrochemical composition which is outside the inner bag, may have a specific gravity greater than 1 and the inner bag, with its content, may have a specific gravity less than 1.

According to a particular feature of the invention which is of particular interest, the bags of the invention are made in such a way that the outer bag, either with its full content or with only the agrochemical composition which is outside the inner bag, may have a specific gravity less than 1 and the inner bag, with its content, may have a specific gravity greater than 1.

According to another feature, the bags of the invention, especially the outer bag, are filled to at least 60% of capacity with the agrochemical composition, more preferably to at least 70% of capacity, still more preferably 80 to 99% of capacity and most preferably 85 to 95% of capacity. The outer bag is preferably not filled to complete capacity because the unused capacity gives the shock resistance, i.e., resistance to breakage when dropped, transported or stored. This unused capacity may or may not contain air or inert gas. An absence of air or inert gas in the unused capacity further improves shock resistance. However in deciding how much unused capacity, or absence of air or inert gas, to provide, the advantages of shock resistance must be balanced against the need, if any, for shock resistance and the cost of providing shock resistance. For example, if the outer bag is stored and/or transported in a shock absorbing container, then it may not be as helpful to provide this unused capacity.

Also, the capacity to which the outer bag is filled, and whether the unused capacity does or does not contain air is affected by whether it is desired to have the bag sink or float.

Whether the bag sinks or floats will depend not only on the unused capacity, but also the specific gravity of the bag contents.

The percentage of capacity to which the inner bag is filled is more dictated, than is the capacity of the outer bag, by whether it is desired that the inner bag would sink or float. For example, compatibility of the bag contents and dispersibility of the bag contents in water affects whether it is desired to have the inner bag and the outer bag both float, or both sink, or have one bag sink and the other bag float. For example, if the active ingredients, or their formulations contained by the inner or outer bags are compatible and dispersible even if both bags break open in the same part of the mixing bath, then it may be desirable to have both bags float or both bags sink.

When the bag is filled with solids, the capacity is relative to bulk volume of the solids, not the actual particle volume of the solids.

According to another feature of the invention, the inner bag may contain a marker, e.g. a dye. This marker is released to show if the inner bag has failed for any reason so that the package should no be used.

In practice the agrochemical compositions used in the instant invention generally comprises the active ingredient(s) in association with other ingredients, for example surfactants, dispersants, thickeners, antifoaming, antifreezing, gelled agents or gelling agents, plasticizers of the polymeric material constituting the enveloping film of the bags.

According to another feature the bags used in the invention are preferably made of a polymeric water soluble film. The thickness of this film is generally between 10 and 500 microns, preferably between 20 and 100 microns.

The polymeric material constituting the wall of the bags may be the same or may be different for the two bags. Even though these two bags may be different, they are both cold water soluble. Cold water soluble means completely soluble in water at temperature lower than 35°C, for example comprised between 5°C and 35°C. Both inner and outer bags dissolve in water in the same conditions, that is to say in the same range of temperature as hereinbefore defined.

The chemical nature of the enveloping film constituting the bags can vary quite widely. Suitable materials are water soluble (or possibly water dispersible) materials which are insoluble in the organic solvents used to dissolve or disperse the agrochemical active ingredient.

Specific suitable materials include polyethylene oxide, such as polyethylene glycol; starch and modified starch; alkyl and hydroxyalkylcellulose, such as hydroxymethylcellulose, hydroxyethylcellulose, hydroxypropyl cellulose; carboxymethylcellulose; polyvinylethers such as poly methyl vinylether or poly(2-methoxyethoxyethylene); poly(2,4-dimethyl-6-triazinylethylene; poly(3-morpholinyl ethylene); poly (N-1,2,4-triazolylethylene); poly(vinylsulfonic acid); polyanhydrides; low molecular weight melamine-formaldehyde resins; low molecular weight urea-formaldehyde resins; poly(2-hydroxyethyl methacrylate); polyacrylic acid and its homologs. Preferably the enveloping film comprises or is made from polyvinylalcohol (PVA). PVA is generally partially or fully alcoholysed or hydrolysed e.g. 40-100%, preferably 80-99% alcoholysed or hydrolysed, polyvinyl acetate (or other ester) film; copolymers or other derivatives of such polymers can also be used.

Preferred materials for constituting the bags in the invention are polyethylene oxide or methylcellulose, or polyvinylalcohol. When polyvinylalcohol is used, it is advantageously a 40-100% alcoholysed or hydrolysed, preferably 80-99% alcoholysed or hydrolysed, polyvinyl acetate film.

The poly-bag system of the instant invention may be used by the farmer by simply putting the system into a tank of water and mixing or recirculating to get the ingredients homogeneously dispersed.

Accordingly, by another feature of the present invention, the poly-bag system is put into a tank of water. Then the farmer waits until the inner bag disassociates from the outer bag and its contents start to leak out. Then the mixing or recirculating starts only after that time. As already said, the bags may float or sink.

An advantage of the instant invention is that it prevents users from opening one package and to try and use only a part of one or the other package. Thus the invention provides a far safer system to apply two compounds to crops. It is safer both for the user and for the crop or plant.

The preparation or manufacturing of the containerization system of the invention can be done according to the known process of preparation or manufacturing of water soluble bags. As a practical manner, the first bag (that is to say the inner bag, or inner bags if more than one) is prepared from a water soluble film, optionally by partial heat sealing. Then it is filled with an agrochemical composition and the bag(s) is finally closed. Then the second bag (that is to say the outer bag) is prepared in the same way. However it is filled not only by an agrochemical composition, but also with the first bag(s) previously prepared. This later outer bag is also closed, preferably by heat sealing.

An advantage of the present invention is to have an easy way to obtain a two-components active unit. Its manufacturing is rather easy and does not need a real mixing system.

Further information may be found in the following copending applications,: U.S. Serial No. 07/713,681, application of David B. Edwards, William J. McCarthy, Leonard E. Hodakowski, Chi-Yu R. Chen, Samuel T. Gouge and Paul J. Weber For "Laminated Bags for containerization of Toxic or Hazardous Materials" filed June 11, 1991; U.S. Serial No. 07/713,682, application of Samuel T. Grouge, Leonard E. Hodakowski, Paul J. Weber and Chi-Yu R. Chen for "Gel Formulations for Hazardous Products" filed June 11, 1991; U.S. Serial NO. 07/713,701, application of Leonard E. Hodakowski, Chi-Yu R. Chen, Samuel T. Gouge and Paul J. Weber for "Water Dispersible Gel Formulations" filed June 11, 1991; U.S. Serial No. 07/713,685, application of Leonard E. Hodakowski, Ricky W. Couch, Samuel T. Gouge and Robert C. Ligon for "Gel Formulations" filed June 11, 1991; and U.S. Serial No. 07/713,683, application of Leonard E. Hodakowski, Chi-Yu R. Chen, Samuel T. Gouge and Paul J. Weber for "Gel Formulations for Use in Toxic or Hazardous Product Containerization Systems" filed June 11, 1991.

The following examples are given for illustrative purposes and should not be understood as restricting the invention.

In these examples, the Brookfield viscosity was measured, as previously indicated with a Brookfield viscosimeter which has a flat plate rotating at 20 revolutions per minute at 20°C.

In all the following examples the prepared gels had a tg(phi) of between 0.1 and 1.5.

### EXAMPLE 1

A package was made by placing a water soluble bag filled with a solid (wettable powder) insecticide into a larger water soluble bag filled with a liquid sticker-spreader.

The film used in this experiment was a laminated film of polyvinyl alcohol with a total thickness of 75 microns (half for each layer).

25 g of a cypermethrin (in wettable powder form) was poured into a small water soluble bag made of polyvinyl alcohol. This wettable powder contained surfactants in a sufficient amount so as to promote dispersion/wetting of the active ingredient into water.

450 g of the spreading/sticking agent Nu-Film 17 (di-1-p-menthene) was poured into a large water soluble polyvinyl alcohol bag. The smaller bag filled with the cypermethrin was also added to this large bag filled with the sticker-spreader. The large bag was then sealed by heat sealing.

This large bag with its content was dropped into a tank filled to 257 litres (68 gallons) of water with 342 ppm hardness. This large bag floated on the water surface. This bag began to dissolve and after approximately 1 minute 70 seconds, small amounts of the spreader-sticker began to leak from the dissolving bag and slowly emulsify into the water. After another 22 seconds the small bag (filled with pyrethroid) also separated from the larger bag. After an additional 55 seconds the small bag began to dissolve and release the cypermethrin wettable powder into the water. This wettable powder and the spreader sticker quickly mixed with the water as soon as the recirculation pump was turned on. After 1 additional minute both pyrethroid and sticker/spreader were completely mixed into the water. The mixture was pumped out of the tank. There were no problems observed by nozzle pluggage or by screen blockage or by sediment left on the tank bottom.

In this example, the wettable powder, as well as the liquid spray adjuvant (spreader/sticker) floated due to their density and air left in the bags.

### EXAMPLE 2

A package was made by placing a water soluble bag filled with a solid water dispersible powder herbicide into a larger water soluble bag filled with a thickened liquid spreading and penetrating adjuvant.

The film used in this experiment was a laminated film of polyvinyl alcohol with a total thickness of 75 microns.

50 g of an 75% sulfonyl urea water dispersible powder was poured into a small water soluble bag made of polyvinyl alcohol. The granules contained surfactant in a sufficient amount so as to promote rapid dispersion.

1000 g of spray adjuvant (Bio 88-water free; mixture of alkylpolyethoxy ethanol + free fatty acids + isopropanol) was poured into a large water soluble polyvinyl alcohol bag. The smaller filled with sulfonyl urea herbicide WDG was also added to this large bag filled with Bio 88 adjuvant. This large bag was then sealed by heat sealing.

The large bag with its content was dropped into a tank filled to 68 litres (18 gallons) of water with 342 ppm hardness. This large bag floated on the water surface. This bag began to dissolve and after approximately 1.45 minutes, releasing the thickened liquid adjuvant into the water. After an additional 30 seconds, the small bag (filled with sulfonyl urea) was also released from the dissolving bag. This powder quickly mixed with the water as soon as the recirculation pump was turned on. After approximately 2 additional minutes of recirculation, the floating water dispersible powder dispersed completely into the water mix. There were no problems observed by nozzle pluggage or by screen blockage or by sediment left on the tank bottom.

In this example, the water dispersible powder, as well as the liquid adjuvant are floating because of their air content and low specific gravity.

### EXAMPLE 3

A small package was made by placing a water soluble bag filled with a water-dispersible granule herbicide (atrazine) into a larger water soluble bag filled with a crop oil concentrate adjuvant.

The film used in this experiment was laminated film of polyvinyl alcohol with a total thickness of 75 microns.

75 g of a sulfonylurea water dispersible granule herbicide was used to fill a small water soluble polyvinyl alcohol bag. The bag was then heat sealed.

950 ml of a crop oil concentrate was poured into a larger water soluble bag made of polyvinyl alcohol. The smaller bag filled with atrazine was also placed inside this larger bag filled with the crop oil concentrate. This large bag with its content was then heat scaled.

This large bag with its content was dropped into a tank of water (60 liters). This large floated on the water Surface and began to dissolve. After approximately 1.7 minutes, it released a small pocket of air at the bottom side of the bag. Twelve seconds later, the small bag full of atrazine water dispersible granules began to spill out of the dissolving polyvinyl alcohol bag and disperse into water. After an additional 57 seconds, the water dispersible granules had wetted in water and dispersed into water. The pump recirculation system was started. This immediately mixed the gel into the tank of water with the atrazine. The mixture was sprayed through the nozzles and final examination showed no sedimentation or pluggage in the nozzles, filters or on the tank bottom.

### EXAMPLE 4

A package was made by placing a water soluble bag filled with a liquid leaf penetrant into a larger water soluble bag filled with a solid wettable powder insecticide.

The film used in this experiment was laminated film of polyvinyl alcohol with a total thickness of 75 microns.

1000 g of a Penetrator (spray adjuvant which is a mixture of paraffin petroleum base + polyol fatty acid esters + polyethoxylated polyol fatty acid esters) was poured into a small water soluble bag made of polyvinyl alcohol.

1200 g of carbaryl wettable powder (80% of carbaryl in the powder) was poured into a large water soluble polyvinyl alcohol bag. The smaller bag filled with the Penetrator was also added to this large bag filled with carbaryl water dispersible granule. This large bag was then sealed by heat sealing.

This large bag with its content was dropped into a tank filled to 60 1 with water (hardness:342ppm). This large bag floated on the water surface. This bag began to dissolve and, after approximately 1 minute 20 seconds, released its contents including the small bag (filled with Penetrator adjuvant). This small bag began to dissolve into the cloudy water mixture. After 1 minute 10 seconds the liquid broke and diluted itself into the water. The pump recirculation was started and the material readily mixed inside the tank.

The contents was sprayed through the nozzles and final examination showed no sedimentation or pluggage or residue in the nozzles, filters or on the tank bottom.

## Claims

1. A containerization system which comprises at least one inner water soluble bag and an outer cold water soluble bag containing the inner bag with its content, characterised in that the inner bag contains an agrochemical selected from plant protection agents, pesticides, insecticides, herbicides, fungicides, nematocides, acaricides, plant nutrients and plant growth regulators, and the outer bag contains another agrochemical different from the first agrochemical and incompatible therewith, selected from activity promoters, penetrating agents, synergists, antidotes, sticking agents, spreaders, activators, compatibility agents, adjuvants for the cold water soluble bags, and plasticizers, wherein both the outer and inner bags dissolve in water under the same conditions and are completely soluble at a temperature lower than 35°C.

2. A containerization system according to claim 1, wherein the said agrochemicals and the wall of the bags they contact are chosen so that the agrochemicals do not substantially dissolve the wall of the bag they contact and do not substantially permeate through it.

3. A containerization system according to claim 1 or 2, wherein the inner and outer bags are made of polymeric water soluble film having a thickness between 10 and 500 microns.

4. A containerization system according to any one of the preceding claims wherein one of the bags, either an inner bag or the outer bag, floats when put into water and the other sinks when put into water.

5. A containerization system according to claim 4 wherein the or each inner bag floats when put into water and the outer bag sinks when put into water.

6. A containerization system according to claim 5, wherein the outer bag, either with its full content or with only the agrochemical composition which is outside the inner bag, has a specific gravity greater than 1 and the inner bag, with its content, has a specific gravity less than 1.

7. A containerization system according to claim 4 wherein the or each inner bag sinks when put into water and the outer bag floats when put into water.

8. A containerization system according to claim 7 wherein the outer bag, either with its full content or with only the agrochemical composition which is outside the inner bag, has a specific gravity less than 1 and the inner bag, with its content, has a specific gravity greater than 1.

9. A containerization system according to any one of the preceding claims which comprises a further water insoluble external container.

10. A containerization system according to any one of the preceding claims wherein the agrochemicals in the bags are in solid and/or liquid and/or gel form.

11. A containerization system according to any one of the preceding claims, wherein the agrochemicals are in a concentrated form.

12. A containerization system according to any one of the preceding claims, wherein the concentration of active ingredients in the agrochemicals in the bags are from 0.5 to 80% (w/w) of active ingredient.

13. A containerization system according to any one of the preceding claims, wherein at least one bag contains an agrochemical composition in the form of water wettable powder or water dispersible granules.

14. A containerization system according to claim 13, wherein one bag floats and contains wettable powder or water dispersible granules.

15. A containerization system according to any one of the preceding claims, wherein the weight ratio of the agrochemicals contained respectively in the outer bag and in the inner bag is within 10% of the ratio of the use rates of the active ingredients contained respectively in the outer bag and the inner bag.

16. A containerization system according to any one of the preceding claims, wherein the volume ratio of the outer bag to the inner bag is more than 1.5:1.

17. A containerization system according to claim 16, wherein the volume ratio of the outer bag to the inner bag is more than 2:1.

18. A containerization system according to any one of the preceding claims, wherein at least one bag contains an agrochemical composition in the form of a non-aqueous liquid or in the form of an organic gel.

19. A containerization system according to claim 18, wherein at leat one bag contains an agrochemical composition in the form of an organic gel, having a viscosity from 600 to 30,000 centipoise.

20. A containerization system according to claim 19, wherein the gel has a viscosity from 1,000 to 12,000 centipoise.

21. A containerization system according to any one of claims 18 to 20, wherein the organic gel has a phase difference phi between the controlled shear stress and the resulting shear strain such that tg(phi) is less than or equal to 1.5.

22. A containerization system according to claim 21, wherein the organic gel has a phase difference phi between the controlled shear stress and the resulting shear strain such that tg(phi) is less than or equal to 1.2.

23. A containerization system according to any one of the preceding claims, wherein the outer bag contains a marker.

24. A containerization system according to any one of the preceding claims, wherein the outer bag is filled to at least 60% capacity but is not filled to complete capacity.

25. A containerization system according to any one of the preceding claims, wherein at least one of the agrochemical compositions is a liquid which has a Brookfield viscosity between 100 and 30,000 centipoise.

## Patentansprüche

1. Verpackungssystem, welches mindestens einen inneren, wasserlöslichen Beutel und einen äußeren, in kaltem Wasser löslichen Beutel aufweist, der den Innenbeutel mit seinem Inhalt enthält, dadurch gekennzeichnet, daß der Innenbeutel ein agrochemisches Präparat, ausgewählt aus Pflanzenschutzmitteln, Pestiziden, Insektiziden, Herbiziden, Fungiziden, Nematoziden, Akariziden, Pflanzennährstoffen und Pflanzenwachstumsreglern enthält, und der Außenbeutel ein weiteres agrochemisches Präparat enthält, welches sich von dem ersten agrochemischen Präparat unterscheidet und unverträglich mit diesem ist, ausgewählt aus Aktivitätsfördermitteln, Eindringmitteln, Synergisten, Gegengiften, Klebemitteln, Ausbreitmitteln, Beschleunigern, Verträglichkeitsmitteln, Hilfsstoffen für die kaltwasserlöslichen Beutel sowie Weichmacher, worin sich Außen- und Innenbeutel in Wasser unter den gleichen Bedingungen auflösen und bei einer Temperatur unterhalb von 35° C vollständig lösbar sind.

2. Verpackungssystem nach Anspruch 1, bei dem die Agrochemikalien und die Wand der Beutel, die sie berühren, so gewählt sind, daß die Agrochemikalien die Wand des Beutels, die sie berühren, nicht wesentlich auflösen und nicht wesentlich durch sie hindurchdringen.

3. Verpackungssystem nach Anspruch 1 oder 2, bei dem Innen- und Außenbeutel aus polymerer, wasserlöslicher Folie in einer Dicke zwischen 10 und 500 Mikrometer gemacht sind.

4. Verpackungssystem nach einem der vorhergehenden Ansprüche, bei dem einer der Beutel, entweder ein Innenbeutel oder der Außenbeutel, schwimmt, wenn er in Wasser gegeben wird und der andere sinkt, wenn er in Wasser gegeben wird.

5. Verpackungssystem nach Anspruch 4, bei dem der oder jeder Innenbeutel schwimmt, wenn er in Wasser gegeben wird und der Außenbeutel sinkt, wenn er in Wasser gegeben wird.

6. Verpackungssystem nach Anspruch 5, bei dem der Außenbeutel entweder mit seinem gesamten Inhalt oder nur mit der agrochemischen Zusammensetzung, die sich außerhalb des Innenbeutels befindet, ein spezifisches Gewicht von mehr als 1 und der Innenbeutel mit seinem Inhalt ein spezifisches Gewicht von weniger als 1 hat.

7. Verpackungssystem nach Anspruch 4, bei dem der oder jeder Innenbeutel sinkt, wenn er in Wasser gegeben wird, und der Außenbeutel schwimmt, wenn er in Wasser gegeben wird.

8. Verpackungssystem nach Anspruch 7, bei dem der Außenbeutel, entweder mit seinem gesamten Inhalt oder nur mit der agrochemischen Zusammensetzung, die sich außerhalb des Innenbeutels befindet, ein spezifisches Gewicht von weniger als 1 und der Innenbeutel mit seinem Inhalt ein spezifisches Gewicht von mehr als 1 hat.

9. Verpackungssystem nach einem der vorhergehenden Ansprüche, welches einen weiteren in Wasser nicht lösbaren äußeren Behälter aufweist.

10. Verpackungssystem nach einem der vorhergehenden Ansprüche, bei dem die Agrochemikalien in den Beuteln in fester und/oder flüssiger und/oder Gelform vorliegen.

11. Verpackungssystem nach einem der vorhergehenden Ansprüche, bei dem die Agrochemikalien in konzentrierter Form vorliegen.

12. Verpackungssystem nach einem der vorhergehenden Ansprüche, bei dem die Konzentration von Wirkstoffen in den agrochemischen Präparaten in den Beuteln von 0,5 bis 80 % (w/w) Wirkstoff betragen.

13. Verpackungssystem nach einem der vorhergehenden Ansprüche, bei dem mindestens ein Beutel eine agrochemische Zusammensetzung in Form eines wassernetzbaren Pulvers oder in Wasser dispergierbaren Körner enthält.

14. Verpackungssystem nach Anspruch 13, bei dem ein Beutel schwimmt und netzbares Pulver oder in Wasser dispergierbare Körnchen enthält.

15. Verpackungssystem nach einem der vorhergehenden Ansprüche, bei dem das Gewichtsverhältnis der jeweils in dem Außenbeutel und in dem Innenbeutel enthaltenen Agrochemikalien innerhalb 10 % des Verhältnisses der Benutzungsraten der Wirkstoffe beträgt, die jeweils im Außenbeutel und im Innenbeutel enthalten sind.

16. Verpackungssystem nach einem der vorhergehenden Ansprüche, bei dem das Volumenverhältnis des Außenbeutels zum Innenbeutel mehr als 1,5:1 beträgt.

17. Verpackungssystem nach Anspruch 16, bei dem das Volumenverhältnis des Außenbeutels zum Innenbeutel mehr als 2:1 beträgt.

18. Verpackungssystem nach einem der vorhergehenden Ansprüche, bei dem mindestens ein Beutel eine agrochemische Zusammensetzung in Form einer nichtwässrigen Flüssigkeit oder in Form eines organischen Gels enthält.

19. Verpackungssystem nach Anspruch 18, bei dem mindestens ein Beutel eine agrochemische Zusammensetzung in Form eines organischen Gels enthält, die eine Viskosität von 600 bis 30000 Centipoise hat.

20. Verpackungssystem nach Anspruch 19, bei dem das Gel eine Viskosität von 1000 bis 12000 Centipoise hat.

21. Verpackungssystem nach einem der Ansprüche 18 bis 20, bei dem das organische Gel eine Phasendifferenz phi zwischen der gesteuerten Scherspannung und der resultierenden Scherdehnung derart hat, daß tg(phi) weniger oder gleich 1,5 ist.

22. Verpackungssystem nach Anspruch 21, bei dem das organische Gel eine Phasendifferenz phi zwischen der gesteuerten Scherspannung und der resultierenden Scherdehnung derart hat, daß tg(phi) weniger oder gleich 1,2 ist.

23. Verpackungssystem nach einem der vorhergehenden Ansprüche, bei dem der Außenbeutel eine Markierung enthält.

24. Verpackungssystem nach einem der vorhergehenden Ansprüche, bei dem der Außenbeutel bis zu mindestens 60 % des Fassungsvermögens gefüllt, aber nicht bis zur vollen Kapazität gefüllt ist.

25. Verpackungssystem nach einem der vorhergehenden Ansprüche, bei dem mindestens eine der agrochemischen Zusammensetzungen eine Flüssigkeit ist, die eine Brookfield-Viskosität zwischen 100 und 30000 Centipoise hat.

## Revendications

1. Système de conditionnement en récipients, qui comprend au moins un sac intérieur soluble dans l'eau et un sac extérieur soluble dans l'eau froide renfermant le sac intérieur avec son contenu, caractérisé en ce que le sac intérieur contient un agent agrochimique choisi entre des agents de protection des végétaux, des pesticides, des insecticides, des herbicides, des fongicides, des nématicides, des acaricides, des substances nutritives pour végétaux et des régulateurs de croissance des plantes, et le sac extérieur contient un autre agent agrochimique différent du premier agent agrochimique et incompatible avec cet agent, choisi entre des renforçateurs d'activité, des agents de pénétration, des synergistes, des antidotes, des agents d'adhésivité, des agents de dissémination, des activateurs, des agents de compatibilité, des adjuvants pour les sacs solubles dans l'eau froide, et des plastifiants, le sac extérieur et le sac intérieur se dissolvant dans l'eau dans les mêmes conditions et étant totalement solubles à une température inférieure à 35°C.

2. Système de conditionnement en récipients suivant la revendication 1, dans lequel les agents agrochimiques et la paroi des sacs avec laquelle ils viennent en contact sont choisis de telle sorte que les agents agrochimiques ne dissolvent pas notablement la paroi du sac avec laquelle ils viennent en contact et ne passent pas notablement à travers cette paroi.

3. Système de conditionnement en récipients suivant la revendication 1 ou 2, dans lequel le sac intérieur et le sac extérieur sont constitués d'un film polymérique hydrosoluble ayant une épaisseur de 10 à 500 micromètres.

4. Système de conditionnement en récipients suivant l'une quelconque des revendications précédentes, dans lequel un des sacs, consistant en un sac intérieur ou le sac extérieur, flotte lorsqu'il est placé dans de l'eau et l'autre coule lorsqu'il est placé dans de l'eau.

5. Système de conditionnement en récipients suivant la revendication 4, dans lequel le ou chaque sac intérieur flotte lorsqu'il est placé dans de l'eau et le sac extérieur coule lorsqu'il est placé dans de l'eau.

6. Système de conditionnement en récipients suivant la revendication 5, dans lequel le sac extérieur, avec son contenu total ou bien avec seulement la composition agrochimique qui est à l'extérieur du sac intérieur, a une densité supérieure à 1 et le sac intérieur, avec son contenu, a une densité inférieure à 1.

7. Système de conditionnement en récipients suivant la revendication 4, dans lequel le ou chaque sac intérieur coule lorsqu'il est placé dans de l'eau et le sac extérieur flotte lorsqu'il est placé dans de l'eau.

8. Système de conditionnement en récipients suivant la revendication 7, dans lequel le sac extérieur, avec la totalité de son contenu ou avec seulement la composition agrochimique qui est à l'extérieur du sac intérieur, a une densité inférieure à 1 et le sac intérieur, avec son contenu, a une densité supérieure à 1.

9. Système de conditionnement en récipients suivant l'une quelconque des revendications précédentes, qui comprend un récipient extérieur supplémentaire insoluble dans l'eau.

10. Système de conditionnement en récipients suivant l'une quelconque des revendications précédentes, dans lequel les agents agrochimiques présents dans les sacs sont sous forme solide et/ou sous forme liquide et/ou sous forme de gel.

11. Système de conditionnement en récipients suivant l'une quelconque des revendications précédentes, dans lequel les agents agrochimiques sont sous forme concentrée.

12. Système de conditionnement en récipients suivant l'une quelconque des revendications précédentes, dans lequel la concentration d'ingrédients actifs dans les agents agrochimiques présents dans les sacs va de 0,5 à 80 % (en poids/poids) d'ingrédient actif.

13. Système de conditionnement en récipients suivant l'une quelconque des revendications précédentes, dans lequel au moins un sac contient une composition agrochimique sous forme d'une poudre mouillable par l'eau ou de granules dispersables dans l'eau.

14. Système de conditionnement en récipients suivant la revendication 13, dans lequel un sac flotte et contient une poudre mouillable ou des granules dispersables dans l'eau.

15. Système de conditionnement en récipients suivant l'une quelconque des revendications précédentes, dans lequel le rapport pondéral des agents agrochimiques présents, respectivement, dans le sac extérieur et dans le sac intérieur est compris dans les limites de 10 % du rapport des taux d'utilisation des ingrédients actifs présents, respectivement, dans le sac extérieur et le sac intérieur.

16. Système de conditionnement en récipients suivant l'une quelconque des revendications précédentes, dans lequel le rapport volumique du sac extérieur au sac intérieur est supérieur à 1,5:1.

17. Système de conditionnement en récipients suivant la revendication 16, dans lequel le rapport volumique du sac extérieur au sac intérieur est supérieur à 2:1.

18. Système de conditionnement en récipients suivant l'une quelconque des revendications précédentes, dans lequel au moins un sac contient une composition agrochimique sous forme d'un liquide non aqueux ou sous forme d'un gel organique.

19. Système de conditionnement en récipients suivant la revendication 18, dans lequel au moins un sac contient une composition agrochimique sous forme d'un gel organique, ayant une viscosité de 600 à 30 000 centipoises.

20. Système de conditionnement en récipients suivant la revendication 19, dans lequel le gel a une viscosité de 1000 à 12 000 centipoises.

21. Système de conditionnement en récipients suivant l'une quelconque des revendications 18 à 20, dans lequel le gel organique présente une différence de phases phi entre la contrainte de cisaillement contrôlée et la déformation en cisaillement résultante telle que tg(phi) soit inférieure ou égale à 1,5.

22. Système de conditionnement en récipients suivant la revendication 21, dans lequel le gel organique présente une différence de phases phi entre la contrainte de cisaillement contrôlée et la déformation en cisaillement résultante telle que tg(phi) soit inférieure ou égale à 1,2.

23. Système de conditionnement en récipients suivant l'une quelconque des revendications précédentes, dans lequel le sac extérieur contient un marqueur.

24. Système de conditionnement en récipients suivant l'une quelconque des revendications précédentes, dans lequel le sac extérieur est rempli à au moins 60 % de sa capacité mais n'est pas rempli à pleine capacité.

25. Système de conditionnement en récipients suivant l'une quelconque des revendications précédentes, dans lequel au moins une des compositions agrochimiques est un liquide qui a une viscosité Brookfield comprise dans l'intervalle de 100 à 30 000 centipoises.
